# EUROPEAN PATENT SPECIFICATION

(11) **EP 3 579 730 B1**
(45) Date of publication and mention of the grant of the patent: **04.08.2021**
(21) Application number: 18701423.8
(22) Date of filing: 17.01.2018
(51) Int. Cl.: A47J 31/46

(54) **MEMBRANE PUMP FOR BEVERAGE PREPARATION MODULE**
MEMBRANPUMPE FÜR GETRÄNKEZUBEREITUNGSMODUL
POMPE À MEMBRANE POUR UN MODULE DE PREPARATION DE BOISSONS

(30) Priority: 09.02.2017 EP 17155317
(43) Date of publication of application: 18.12.2019
(73) Proprietor: Société des Produits Nestlé S.A., 1800 Vevey (CH)
(72) Inventor: PUGLIESE, Alexandre, 1094 Paudex (CH); PERENTES, Alexandre, 1036 Sullens (CH)
(74) Representative: Navarro Fernández, Maria Isabel
(86) International application number: PCT/EP2018/051065
(87) International publication number: WO 2018/145867

(56) References cited:
- US-A1- 2013 129 885
- US-A1- 2014 338 541
- US-A1- 2016 017 881

## Description

### Field of the invention

The present invention relates to a membrane pump used in a beverage preparation module to deliver fluid at a certain pressure and flow rate for the preparation of the beverage, providing high in-cup quality and a broad usage flexibility. The invention further relates to a beverage preparation module comprising such a pump.

### Background of the invention

The field of the invention pertains to beverage preparation machines, in particular using capsules of an ingredient of the beverage to be prepared. Certain beverage preparation machines use capsules containing ingredients to be extracted or to be dissolved and comprise filling means that include a pump for liquid, usually water, which pumps the liquid from a source of water that is cold or heated through heating means, such as a thermoblock or the like.

Especially in the field of tea and coffee preparation, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup.

Typically, beverage preparation machines have a body arranged to circulate a fluid to a connection arrangement having a capsule piercer for connecting a removable support or holder of an ingredient capsule and pierce such capsule during the connection. Liquid is circulated via the connection arrangement into the pierced capsule to form the beverage by mixing the liquid with the ingredient in the capsule. Examples of such beverage machines are disclosed in WO2005/016093 and EP 1 868 473.

Typically, fluid systems of beverage preparation machines comprise a piston pump. These fluid systems are designed and optimized for delivering a fixed flow of liquid into the capsule under a given pressure. The couple flow/pressure is specifically chosen to fit the type of beverages the machine is arranged to prepare. By design, the characteristics and the performances of the piston pump are well-known and adapted only to this restricted domain: for instance, for preparing beverages with a high flow of liquid injected at a low-pressure.

Typically, a fluid system of a conventional low-pressure machine, for example a coffee machine, is arranged to deliver between 350 and 600 ml/min of water under a pressure comprised between 0 and 5 bars. A fluid system of a high-pressure espresso coffee machine is arranged to deliver between 150 and 300 ml/min of water under a pressure comprised between 15 and 25 bars. While a piston pump performs reasonably well in traditional mono-system beverage machines, i.e. machines adapted to prepare beverages with similar flow/pressure requirements, it is not adapted to multi-system beverage machines adapted to prepare different beverages with different flow/pressure requirements.

Membrane pumps allow a good adaptation of the pressure and flow rate of the fluid to be delivered to a capsule depending on the beverage to prepare. Therefore, using a common fluidic system and a single membrane pump, different flow/pressure requirements can be used. Such solution is a flexible and cost-effective solution allowing a fine-tuning of the preparation process to enhance in-cup quality of the beverage. Moreover, the membrane pump allows higher flexibility in terms of integration into the machine, particularly thanks to the possibilities to place the inlet and the outlet of the pump with greater flexibility and thanks to the reduced length of the chamber of the pump compared to a piston pump. A membrane pump for beverage preparation modules is known from US-A-2014/0338541.

The present invention is directed to providing an improved membrane pump to be used in a beverage preparation module for delivering fluid at a certain pressure and flow rate, allowing high in-cup quality (good taste, aroma and crema for coffees and better dissolution for soluble products), reducing flowrates above a defined pressure in order to get a better in cup quality without compromising the pressure values and maintaining at the same time a tight cost by not increasing the number of parts used and having no need of additional water connectors. The membrane pump of the invention further allows a high flexibility fitting all beverage preparation modules and allowing to adapt the flow rate and pressure values depending on the type of beverage to prepare, typically using high pressure values (comprised between 12 and 25 bars) and low flow rates (typically between 100 and 300 ml/min) for preparing espressos and cappuccinos, the membrane pump allowing to deliver between 300 and 600 ml/min of the liquid to the module with a pressure comprised between 0 and 3 bars, adapted to prepare low pressure high flow beverages, such as filter coffee or chocolates for example.

### Summary of the invention

According to a first aspect, the invention relates to a membrane pump for a beverage preparation module, according to independent claim 1.

Preferably, according to the invention, the by-pass valve is of the spring type and the spring characteristics are chosen so as to allow water flow only above a certain threshold pressure value (P₁) by acting on the spring compression distance. Typically, when the threshold pressure value (P₁) is reached the by-pass valve opens which results in a flow rate reduction through the pump outlet.

In the membrane pump of the invention, the by-pass valve is typically configured to allow a maximum pressure value (Pₘₐₓ) as security value above which the pump pressure cannot increased.

According to a possible embodiment, the by-pass valve can be actively operated by a mechanical actuator or by a motor so that the valve characteristics and pressure settings can be modified.

Preferably, the membrane pump of the invention is adapted to deliver up to 600 ml/min of the fluid to the beverage preparation module and is typically configured to deliver the fluid to the module at a pressure up to 25 bars.

Typically, the membrane pump of the invention is configured to deliver between 80 and 500 ml/min of the fluid to the beverage preparation module at a pressure comprised between 4 and 25 bars, during at least one period of the preparation of the beverage.

According to the invention, the membrane pump comprises a damper ring allowing priming of inner volumes in the pump and allowing modification of flowrate (F) and pressure (P) behaviors of the pump by modifying the stiffness of the ring material.

Preferably, the damper ring comprises multiple stacked layers of elastomeric materials.

The membrane pump of the invention typically further comprises a flexible membrane arranged in the pump inlet and configured to absorb the vibrations and shocks created by the movements of the by-pass valve.

Preferably, the flexible membrane in the pump of the invention comprises multiple stacked layers of elastomeric materials.

According to a second aspect, the invention relates to a beverage preparation module comprising a membrane pump as the one described and configured to prepare a beverage from a beverage ingredient arranged in a container: the beverage preparation module comprises reading means configured to retrieve information from identification means in the container with the beverage preparation process parameters.

The beverage preparation process parameters preferably comprise information on the flow rate (F) and pressure (P) of the fluid delivered to the beverage preparation module.

In the beverage preparation module of the invention, the identification means typically comprise information on the actuation parameters of the by-pass valve and/or the speed of a motor to regulate the flow rate (F) and pressure (P) of the fluid delivered to the beverage preparation module.

### Brief description of the drawings

Further features, advantages and objects of the present invention will become apparent for a skilled person when reading the following detailed description of non-limiting embodiments of the present invention, when taken in conjunction with the appended drawings, in which:
Fig. 1 shows the configuration of a membrane pump used in a beverage preparation module, according to the present invention.
Fig. 2 shows a priming step of functioning of the pump a membrane pump used in a beverage preparation module, according to the present invention.
Fig. 3 shows a step of functioning of the pump a membrane pump used in a beverage preparation module, according to the present invention, where the fluid is allowed to enter through the pump inlet.
Fig. 4 shows a pressure step of functioning of the pump a membrane pump used in a beverage preparation module, according to the present invention, where the fluid is compressed through the pump outlet.
Fig. 5 shows the configuration of a membrane pump used in a beverage preparation module, according to the present invention, representing the positioning of a by-pass valve connected to the pump inlet, the by-pass valve being actively controlled.
Fig. 6 shows a graph representing the flow rate and pressure variation by the acting of a by-pass valve connected to the pump inlet, in a membrane pump used in a beverage preparation module, according to the present invention, when the by-pass valve is passively and actively operated.
Fig. 7 shows the configuration of a membrane pump used in a beverage preparation module, according to the present invention, representing a damper ring below a piston.
Fig. 8 shows a graph representing the flow rate and pressure variation by modifying the stiffness of the material of the damper ring, in a membrane pump used in a beverage preparation module, according to the present invention.
Fig. 9 shows the configuration of a membrane pump used in a beverage preparation module, according to the present invention, the by-pass valve being actively controlled.

### Detailed description of exemplary embodiments

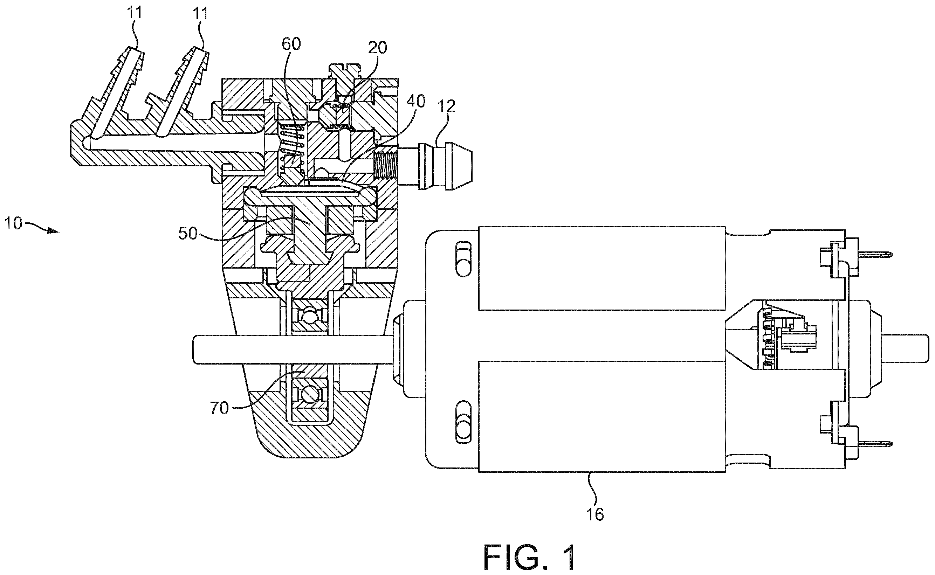

Looking to Figure 1, *a membrane pump 10* according to an embodiment of the invention is represented, adapted to be used in beverage preparation modules. The pump 10 is a membrane pump, also sometimes designated by the term diaphragm pump. The membrane pump is a positive displacement pump comprising a chamber with at least one flexible membrane inlet 40. This membrane inlet 40 is deformable under the action of a piston 50 actuated by an eccentric 70 coupled to a motor 16. The membrane inlet 40 is flexible and allows the increase or decrease of the volume of the chamber depending on its position, therefore allowing the control of the flow rate and pressure of the fluid delivered by the pump to the beverage module during the preparation of the beverage. The pump 10 is further provided with an outlet check valve 60 preventing the reverse flow of the fluid.

The field of the invention pertains to beverage preparation machines, in particular using capsules of an ingredient of the beverage to be prepared.

For the purpose of the present description, a "beverage" is meant to include any human-consumable liquid substance, such as tea, coffee, hot or cold chocolate, milk, soup, baby food, etc. A "capsule" is meant to include any pre-portioned beverage ingredient, such as a flavoring ingredient, within an enclosing packaging of any material, in particular an airtight packaging, e.g. plastic, aluminum, recyclable and/or biodegradable packaging, and of any shape and structure, including soft pods or rigid cartridges containing the ingredient.

The membrane inlet 40 can be made of rubber, thermoplastic or Teflon. The chamber is fluidically connected to a pump inlet 12 and to at least a pump outlet 11. The pump inlet 12 is in fluid connection with a liquid supply by means of a hose or tubular member: the liquid supply may be a liquid reservoir which is preferably connected to the device in a detachable manner. The pump inlet 12 comprises a by-pass valve 20, while the pump outlet 11 comprises an outlet check valve 60. The by-pass valve 20 allows a further and precise control of the flow rate and pressure of the fluid delivered to the module during beverage preparation.

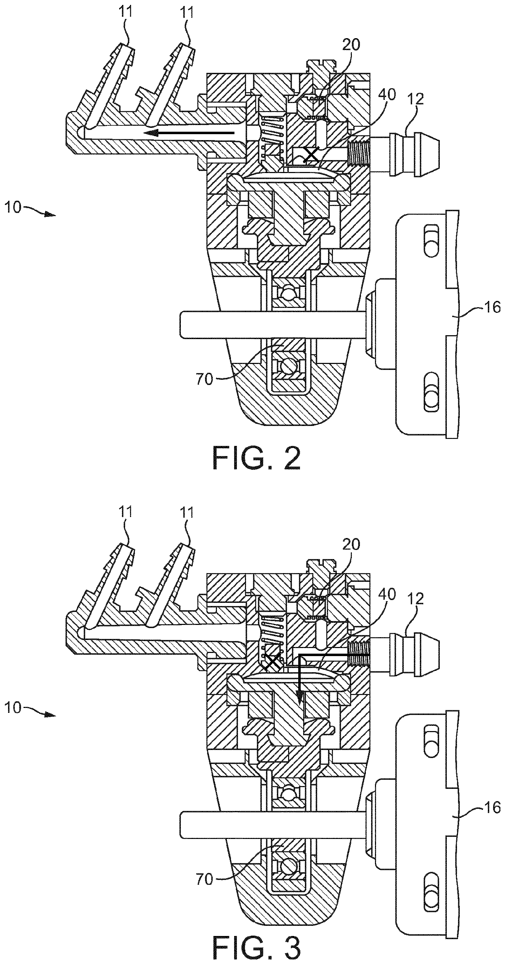

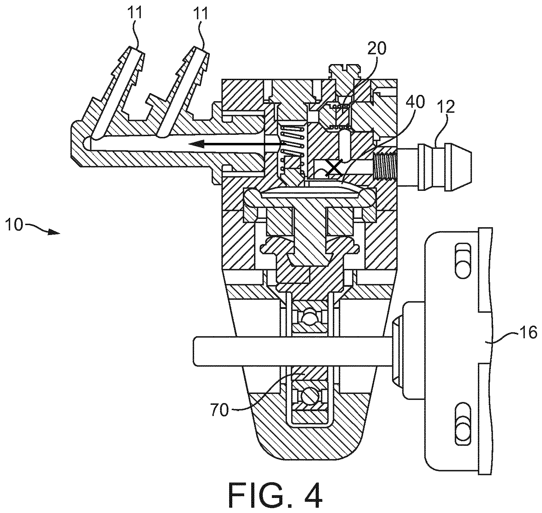

Figures 2-4 show the operation of a membrane pump 10 according to the invention, as it will be further described. Figure 2 shows a first step known as *priming* where the membrane inlet 40 is pushed up by the eccentric 70 in order to remove the maximum of air trapped in the chamber: the flexible membrane inlet 40 closes the pump inlet 12, while the pump outlet 11 is open allowing the purge of air from the chamber. Figure 3 shows a second step of operation where the flexible membrane inlet 40 is pushed down by the eccentric 70, creating a vacuum effect in the chamber allowing fluid to enter the chamber through the pump inlet 12; the outlet check valve 60 is closed so no fluid can leave the chamber and exit through the pump outlet 11. A third phase or step is represented in Figure 3, showing a *pressure* position, where the flexible membrane inlet 40 is pushed back up again by the eccentric 70, closing the pump inlet 12 and compressing the fluid through the outlet check valve 60. The membrane inlet 40 moving up and down completes several cycles.

The by-pass valve 20 connected to the pump inlet 12 is the main element in the pump 10 of the present invention, integrated in the configuration of the pump and not external as in the existing prior art, which would make the system less compact and requiring additional water connectors. The by-pass valve 20 in the pump 10 of the invention connects the pump outlet 11 back to the pump inlet 12. The valve 20 is typically configured as a spring, specially designed to let the water flow into the pump chamber only above a certain pressure value (threshold pressure value P₁ as explained later). When this pressure is reached, the valve 20 starts opening, resulting in a flow rate reduction of the fluid provided through the pump outlet 11.

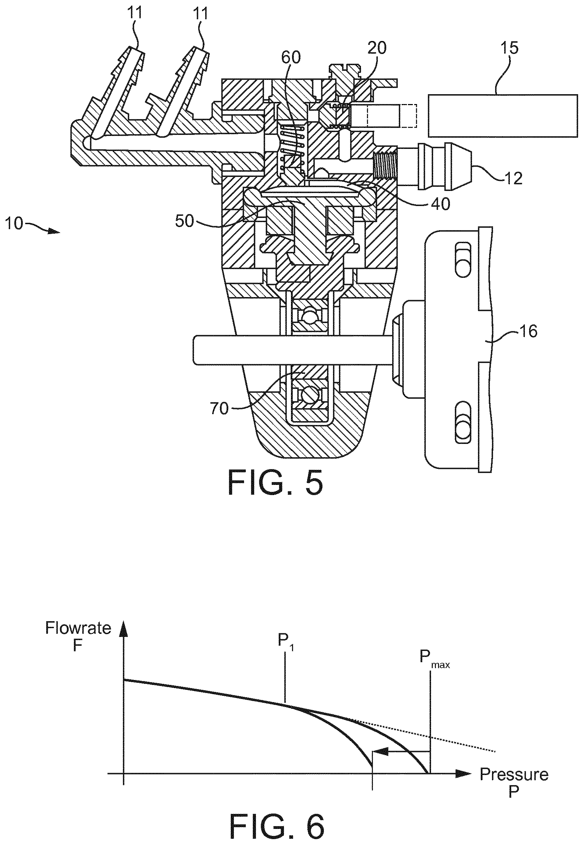

The by-pass valve 20 is a key element in the pump configuration of the invention, for two reasons: it allows reducing the flow rate above a certain defined pressure level in order to get a better in-cup quality; it is extremely important to reduce the flow rate without compromising the pressure which is possible to do with this by-pass valve 20. Looking at Figure 6, the by-pass valve 20 starts opening when a certain threshold pressure value P₁ is reached, and so the flow rate drops. Also, the valve 20 acts as a security valve to protect the user as it limits the maximum pressure in the chamber at a certain defined level Pₘₐₓ.

The by-pass valve 20 is able to regulate the pressure values by connecting the pump outlet 11 to the pump inlet 12: the valve is configured having a spring designed to let fluid flow only above a certain pressure value P₁. When this pressure P₁ is reached the valve 20 starts opening which results in a flow rate reduction through the pump outlet 11, as it can be seen in the graph of Figure 6. What the by-pass valve 20 in the pump 10 of the invention does is allowing to reduce the flow rate (to obtain a good quality of beverage, typically of coffee, when making the fluid pass through the beverage ingredient) without compromising pressure, thus allowing a high in-cup quality. Moreover, as represented in the graph of Figure 6, the by-pass valve 20 allows safely protecting the user as it limits the maximum pressure value allowed in the pump to a specific value of Pₘₐₓ.

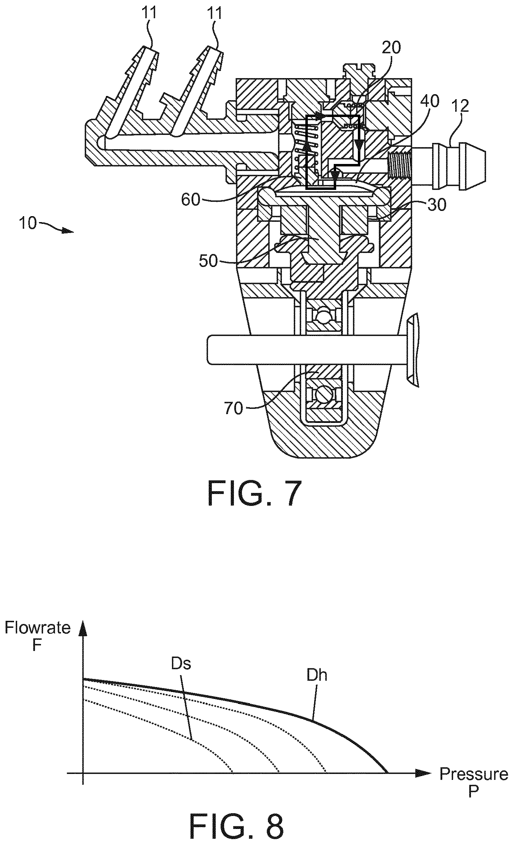

The pump 10 of the invention further comprises a damper ring 30 (see Figure 7, for example) arranged below the piston 50. The damper ring 50 is a key element in the system of the invention for two reasons: a) to ensure that all the air gaps and dead volumes are properly closed in order to ensure a proper priming, and b) to modify and adjust the curve flow rate and pressure in order to get the requested specification depending on the beverage to produce, typically using high pressure values and low flow rates for espressos and cappuccinos, and higher flow rates and lower pressure adapted to prepare low pressure high flow beverages, such as filter coffee or chocolates for example. Reverting to Figure 8, it shows different possible curves of flow rates and pressures, to be chosen depending on the different beverages to prepare: the starting points of the curves in the flow rate axis (Y vertical axis) are fixed and depend on the stiffness of the material of the damper ring 30, lower starting point for a soft damper Dₛ and higher starting point on the flow rate axis for a harder damper Dₕ. The starting point of the curve in the Y axis (flow rate) being fixed depending on the stiffness of the damper ring 30, the end point of the curve in the pressure axis (X axis) depends on the position of the by-pass valve 20, i.e. on its opening level for pressure regulation. The graph in Figure 8, however, only shows the curves ending at a certain pressure level for a specific damper stiffness, and not the variations of different ending points in the pressure axis when departing of a same damper stiffness.

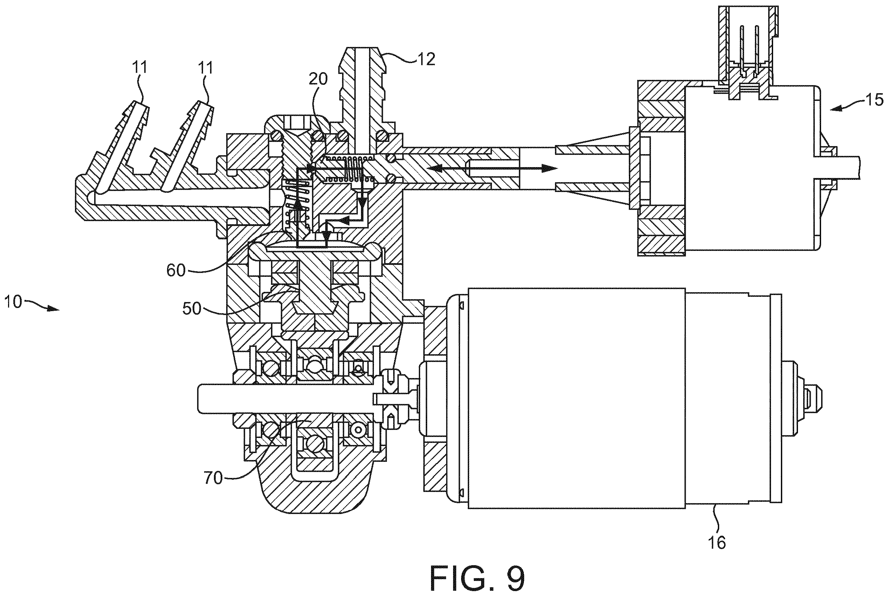

Figure 9 shows also another embodiment of the membrane pump of the present invention. The by-pass valve 20 can be operated manually or it can be automatically operated, by an extra motor 15 (Figure 9). When the spring of the by-pass valve 20 is actively controlled by a mechanical actuator or a motor (extra motor 15), the characteristics of the by-pass valve 20 can be modified and different pressure settings (P₁ and Pₘₐₓ) can be defined. This allows providing a very broad freedom to any product extraction profile, such as for example low pressure brewing. This can also be used as a safe mode operation at low pressure value (reduced Pₘₐₓ) when carrying out certain operations in the pump, such as descaling, for example. Reverting to Figure 6, the curve for the actively controlled by-pass valve is represented ending at a lower maximum pressure value: the by-pass valve 20 starts opening earlier when it is actively controlled by an extra motor 15.

Typically, the damper ring 30 in the pump of the invention comprises multiple stacked layers of elastomeric materials, which do not need to be food graded, as no fluid would flow through them. The flexible membrane 40 in the pump 10 of the invention can comprise multiple stacked layers of elastomeric materials which need to be, however, food graded, as fluid may get in contact with them.

According to a second aspect, the invention relates to *a beverage preparation module* comprising a membrane pump 10 as the one previously described and configured to prepare a beverage from a beverage ingredient arranged in a container. The beverage preparation module is typically configured as a coffee machine or the like, and the container is typically provided as a capsule. The beverage preparation module preferably comprises reading means configured to retrieve information in identification means in the container: these identification means comprise typically the information with the beverage preparation process parameters. These beverage preparation process parameters preferably comprise information on the flow rate (F) and pressure (P) of the fluid delivered to the beverage preparation module during the preparation of a beverage. Furthermore, the identification means also typically comprise information on the actuation parameters of the by-pass valve 20 (opening, closing of it, degree of opening, etc.) and/or of the speed of the motor 16 actuating the eccentric 70 and this one acting on the flexible membrane inlet 40, to regulate the flow rate (F) and pressure (P) of the fluid delivered to the beverage preparation module.

Typically, the nominal speed of the motor 16 is calibrated in the factory, when manufacturing the pump 10, in order to optimize pump vibrations and the overall pump performance according to the pump environment (for example the pipes length, etc.).

Although the present invention has been described with reference to preferred embodiments thereof, many modifications and alternations may be made by a person having ordinary skill in the art without departing from the scope of this invention which is defined by the appended claims.

## Claims

1. Membrane pump (10) for beverage preparation module delivering a fluid at a certain flow rate (F) and at a certain pressure (P) to the beverage preparation module, the pressure (P) and the flow rate (F) being chosen depending on the type of beverage to produce;
**characterised in that** the membrane pump (10) comprises an integrated by-pass valve (20) connecting a pump outlet (11) to a pump inlet (12) in order to reduce the flow rate (F) above a certain pressure (P₁) value,
and **in that** the membrane pump (10) further comprises a damper ring (30) allowing priming of inner volumes in the pump (10) and allowing modification of flowrate (F) and pressure (P) behaviors of the pump by modifying the stiffness of the ring material.

2. Membrane pump (10) according to claim 1 wherein the by-pass valve (20) is of the spring type, the spring characteristics being chosen so as to allow water flow only above a certain threshold pressure value (P₁) by acting on the spring compression distance.

3. Membrane pump (10) according to claim 2 wherein when the threshold pressure value (P₁) is reached the by-pass valve (20) opens which results in a flow rate reduction through the pump outlet (11).

4. Membrane pump (10) according to any of the previous claims wherein the by-pass valve is configured to allow a maximum pressure value (Pₘₐₓ) as security value above which the pump pressure cannot increased.

5. Membrane pump (10) according to any of the previous claims wherein the by-pass valve (20) is actively operated by a mechanical actuator or a motor (15) so that the valve characteristics and pressure settings can be modified.

6. Membrane pump (10) according to any of the previous claims, adapted to deliver up to 600 ml/min of the fluid to the beverage preparation module.

7. Membrane pump (10) according to claim 1 configured to deliver the fluid to the module at a pressure up to 25 bars.

8. Membrane pump (10) according to any of the previous claims configured to deliver between 80 and 500 ml/min of the fluid to the beverage preparation module at a pressure comprised between 4 and 25 bars, during at least one period of the preparation of the beverage.

9. Membrane pump (10) according to any of the previous claims wherein the damper ring (30) comprises multiple stacked layers of elastomeric materials.

10. Membrane pump (10) according to any of the previous claims further comprising a flexible membrane (40) arranged in the pump inlet (12) configured to absorb the vibrations and shocks created by the movements of the by-pass valve (20).

11. Membrane pump (10) according to claim 10 wherein the flexible membrane (40) comprises multiple stacked layers of elastomeric materials.

12. Beverage preparation module comprising a membrane pump (10) according to any of the previous claims and configured to prepare a beverage from a beverage ingredient arranged in a container;
the beverage preparation module comprising reading means configured to retrieve information from identification means in the container with the beverage preparation process parameters.

13. Beverage preparation module according to claim 12 wherein the beverage preparation process parameters comprise information on the flow rate (F) and pressure (P) of the fluid delivered to the beverage preparation module.

14. Beverage preparation module according to any of claims 12-13 wherein the identification means comprise information on the actuation parameters of the by-pass valve (20) and/or the speed of a motor (16) to regulate the flow rate (F) and pressure (P) of the fluid delivered to the beverage preparation module.

## Patentansprüche

1. Membranpumpe (10) für ein Getränkezubereitungsmodul, die ein Fluid mit einer bestimmten Durchflussrate (F) und mit einem bestimmten Druck (P) an das Getränkezubereitungsmodul liefert, wobei der Druck (P) und die Durchflussrate (F) in Abhängigkeit von der Art des herzustellenden Getränks ausgewählt werden;
**dadurch gekennzeichnet, dass** die Membranpumpe (10) ein integriertes Bypassventil (20) umfasst, das einen Pumpenauslass (11) mit einem Pumpeneinlass (12) verbindet, um die Durchflussrate (F) über einen bestimmten Wert des Drucks (P₁) zu reduzieren, und dadurch, dass die Membranpumpe (10) ferner einen Dämpfungsring (30) umfasst, der das Ansaugen von Innenvolumina in der Pumpe (10) ermöglicht und das Modifizieren von Durchfluss- (F) und Druck-(P) Verhalten der Pumpe durch Modifizieren der Steifigkeit des Ringmaterials ermöglicht.

2. Membranpumpe (10) nach Anspruch 1, wobei das Bypassventil (20) vom Federtyp ist, wobei die Federkennlinien so gewählt sind, dass sie einen Wasserfluss nur oberhalb eines bestimmten Schwellendruckwerts (P₁) durch Einwirken auf den Federkompressionsweg zulassen.

3. Membranpumpe (10) nach Anspruch 2, wobei bei Erreichen des Schwellendruckwerts (P₁) das Bypassventil (20) öffnet, was zu einer Durchflussratenreduktion durch den Pumpenauslass (11) führt.

4. Membranpumpe (10) nach einem der vorstehenden Ansprüche, wobei das Bypassventil konfiguriert ist, einen maximalen Druckwert (Pₘₐₓ) als Sicherheitswert zuzulassen, über den hinaus sich der Pumpendruck nicht erhöhen kann.

5. Membranpumpe (10) nach einem der vorstehenden Ansprüche, wobei das Bypassventil (20) aktiv durch einen mechanischen Aktuator oder einen Motor (15) betätigt wird, sodass die Ventilcharakteristiken und Druckeinstellungen modifiziert werden können.

6. Membranpumpe (10) nach einem der vorstehenden Ansprüche, die angepasst ist, bis zu 600 ml/min des Fluids an das Getränkezubereitungsmodul zu liefern.

7. Membranpumpe (10) nach Anspruch 1, die konfiguriert ist, um das Fluid mit einem Druck von bis zu 25 bar an das Modul zu liefern.

8. Membranpumpe (10) nach einem der vorstehenden Ansprüche, die konfiguriert ist, um während mindestens eines Zeitraums der Zubereitung des Getränks zwischen 80 und 500 ml/min des Fluids mit einem Druck zwischen 4 und 25 bar an das Getränkezubereitungsmodul zu liefern.

9. Membranpumpe (10) nach einem der vorstehenden Ansprüche, wobei der Dämpfungsring (30) mehrere gestapelte Schichten aus elastomeren Materialien umfasst.

10. Membranpumpe (10) nach einem der vorstehenden Ansprüche, ferner umfassend eine flexible Membran (40), die in dem Pumpeneinlass (12) angeordnet ist und konfiguriert ist, um die Schwingungen und Stöße, die durch die Bewegungen des Bypassventils (20) erzeugt werden, zu absorbieren.

11. Membranpumpe (10) nach Anspruch 10, wobei die flexible Membran (40) mehrere gestapelte Schichten aus elastomeren Materialien umfasst.

12. Getränkezubereitungsmodul, das eine Membranpumpe (10) nach einem der vorstehenden Ansprüche umfasst und konfiguriert ist, um ein Getränk aus einem Getränkebestandteil zuzubereiten, der in einem Behälter angeordnet ist;
wobei das Getränkezubereitungsmodul Lesemittel umfasst, die konfiguriert sind, um Informationen von Identifikationsmitteln in dem Behälter mit den Getränkezubereitungsprozess-Parametern abzurufen.

13. Getränkezubereitungsmodul nach Anspruch 12, wobei die Getränkezubereitungsprozess-Parameter Informationen über die Durchflussrate (F) und den Druck (P) des Fluids, das an das Getränkezubereitungsmodul geliefert wird, umfassen.

14. Getränkezubereitungsmodul nach einem der Ansprüche 12-13, wobei die Identifikationsmittel Informationen über die Betätigungsparameter des Bypassventils (20) und/oder die Drehzahl eines Motors (16) zum Regulieren der Durchflussrate (F) und des Drucks (P) des Fluids, das an das Getränkezubereitungsmodul geliefert wird, umfassen.

## Revendications

1. Pompe à membrane (10) pour un module de préparation de boisson distribuant un fluide à un certain débit (F) et à une certaine pression (P) au module de préparation de boisson, la pression (P) et le débit (F) étant choisis en fonction du type de boisson à produire ;
**caractérisée en ce que** la pompe à membrane (10) comprend une vanne de dérivation intégrée (20) reliant une sortie de pompe (11) à une entrée de pompe (12) afin de réduire le débit (F) au-dessus d'une certaine valeur de pression (P₁), et **en ce que** la pompe à membrane (10) comprend en outre une bague d'amortissement (30) permettant un amorçage de volumes internes dans la pompe (10) et permettant une modification de comportements de débit (F) et de pression (P) de la pompe en modifiant la rigidité du matériau de bague.

2. Pompe à membrane (10) selon la revendication 1 dans laquelle la vanne de dérivation (20) est du type à ressort, les caractéristiques de ressort étant choisies de façon à permettre un écoulement d'eau uniquement au-dessus d'une certaine valeur de pression seuil (P₁) en agissant sur la distance de compression de ressort.

3. Pompe à membrane (10) selon la revendication 2 dans laquelle lorsque la valeur de pression seuil (P₁) est atteinte la vanne de dérivation (20) s'ouvre ce qui résulte en une réduction de débit à travers la sortie de pompe (11).

4. Pompe à membrane (10) selon l'une quelconque des revendications précédentes dans laquelle la vanne de dérivation est configurée pour permettre une valeur de pression maximale (Pₘₐₓ) en tant que valeur de sécurité au-dessus de laquelle la pression de pompe ne peut pas augmenter.

5. Pompe à membrane (10) selon l'une quelconque des revendications précédentes dans laquelle la vanne de dérivation (20) est actionnée activement par un actionneur mécanique ou un moteur (15) de sorte que les caractéristiques de vanne et les réglages de pression peuvent être modifiés.

6. Pompe à membrane (10) selon l'une quelconque des revendications précédentes, conçue pour distribuer jusqu'à 600 ml/min du fluide au module de préparation de boisson.

7. Pompe à membrane (10) selon la revendication 1 configurée pour distribuer le fluide au module à une pression allant jusqu'à 25 bars.

8. Pompe à membrane (10) selon l'une quelconque des revendications précédentes configurée pour distribuer entre 80 et 500 ml/min du fluide au module de préparation de boisson à une pression comprise entre 4 et 25 bars, pendant au moins une période de la préparation de la boisson.

9. Pompe à membrane (10) selon l'une quelconque des revendications précédentes dans laquelle la bague d'amortissement (30) comprend de multiples couches empilées de matériaux élastomères.

10. Pompe à membrane (10) selon l'une quelconque des revendications précédentes comprenant en outre une membrane flexible (40) agencée dans l'entrée de pompe (12) configurée pour absorber les vibrations et chocs créés par les mouvements de la vanne de dérivation (20).

11. Pompe à membrane (10) selon la revendication 10 dans laquelle la membrane flexible (40) comprend de multiples couches empilées de matériaux élastomères.

12. Module de préparation de boisson comprenant une pompe à membrane (10) selon l'une quelconque des revendications précédentes et configuré pour préparer une boisson à partir d'un ingrédient de boisson agencé dans un récipient ;
le module de préparation de boisson comprenant des moyens de lecture configurés pour récupérer des informations à partir de moyens d'identification dans le récipient avec les paramètres de processus de préparation de boisson.

13. Module de préparation de boisson selon la revendication 12 dans lequel les paramètres de processus de préparation de boisson comprennent des informations concernant le débit (F) et la pression (P) du fluide distribué au module de préparation de boisson.

14. Module de préparation de boisson selon l'une quelconque des revendications 12 à 13 dans lequel les moyens d'identification comprennent des informations concernant les paramètres d'actionnement de la vanne de dérivation (20) et/ou la vitesse d'un moteur (16) pour réguler le débit (F) et la pression (P) du fluide distribué au module de préparation de boisson.
